# EUROPÄISCHE PATENTANMELDUNG

(11) **EP 0 953 842 A1**
(43) Veröffentlichungstag der Anmeldung: **03.11.1999**
(21) Anmeldenummer: 98810393.3
(22) Anmeldetag: 01.05.1998
(51) Int. Cl.: G01N 35/00, B01L 3/00, G01N 1/38, B01F 11/00, G01N 27/00

(54) **Analysenautomat mit an der Unterseite verjüngter Mischkammer und mit dieser dichtend verbundener Sockeleinheit**

(71) Anmelder: F. HOFFMANN-LA ROCHE AG, 4070 Basel (CH)
(72) Erfinder: Kenel,Urs, 6340 Baar (CH); Rauh,Jürgen, 76639 Grenzach-Wyhlen (DE)
(74) Vertreter: AMMANN PATENTANWAELTE AG BERN

(57) **Zusammenfassung**

Der Analysenautomat für die Untersuchung von Flüssigproben umfasst eine auswechselbare Mischkammereinheit (34), deren nach unten spitz zulaufende Mischkammer (14) eine Ausgangsöffnung (18) hat, welche in eine Bohrung (19) einmündet, durch welche die Mischkammer (14) mit einer Auslassöffnung (20) verbunden ist. Bei einem Uebergang (13) geht diese Bohrung (19) abrupt in die Auslassöffnung (20) für die zu analysierende Flüssigkeit über. Der abrupte Übergang (13) ist eine Verengung, welche als Auffangfalle für störende Partikel (23), z.B. Blutgerinsel, dient, die andernorts zu unerwünschten Verstopfungen führen könnten. Partikel, die sich nicht seitlich über eine weitere Auslassöffnung (17) wegspülen lassen, können entfernt werden, indem die Mischkammereinheit (34) mit wenigen Handgriffen von der Sockeleinheit (35) abgenommen und durchgeblasen wird. Ein Dichtungsring (43) dient zum Abdichten zwischen dem ebenen Boden (41) der Mischkammereinheit (34) und dem Anschluss (47). Ein Fluidsensor (50) dient zum Detektieren von durch diesen Anschluss fliessender Probenflüssigkeit.

## Beschreibung

Die Erfindung betrifft einen Analysenautomat für die Untersuchung von Flüssigproben entsprechend dem Oberbegriff von Patentanspruch 1.

Analysenautomaten der genannten Art sind bekannt.

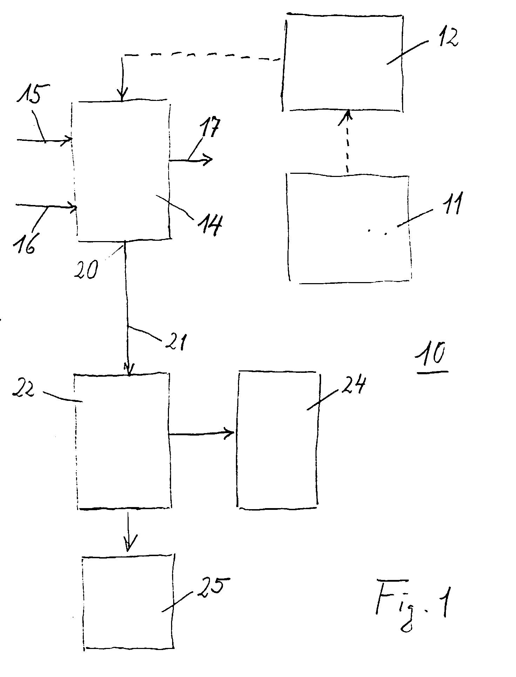

Figur 1 zeigt als Stand der Technik das beispielsweise Blockschaltbild eines Analysenautomaten 10 zur selektiven Bestimmung von Ionen, z.B. Li⁺, K⁺, Na⁺` Cl⁻, in Flüssigproben biologischer Substanzen wie Blut oder Urin. Die Proben werden in separaten Gefässen auf einer Probenplattform 11 bereitgestellt. Mit Hilfe eines automatischen Pipettenarmes 12 lassen sich nun seriell kleine Probenmengen einer Mischkammer 14 zuführen. Die Kammer 14 ist im wesentlichen ein oben offenes, zylindrisches Gefäss mit nach unten sich kontinuierlich verjüngendem Boden. In dieses Gefäss münden seitlich oben Einlassöffnungen 15, 16 für Luft bzw. Wasser und unten zwei Auslassöffnungen 17, 20. Die über die Pipettennadel ankommenden Flüssigproben lassen sich durch einen über die Öffnung 15 erzeugten Luftwirbel homogenisieren und über die Auslassöffnung 20 und eine Verbindungsleitung 21 dem Messkanal eines Analysenblocks 22, der z.B. einen Elektrodenblock sein kann, zuleiten. Die zweite Einlassöffnung 16 dient vor allem zum Zuführen von Waschwasser und die Auslassöffnung 17 zum Absaugen desselben sowie eventueller überschüssiger Flüssigkeit (waste).

An den Messkanal des Analysenblocks 22 sind z.B. mehrere Ionen-selektive Elektroden und eine Referenzelektrode angeschlossen, die die Ionenkonzentration z. B. der oben genannten Ionen messen und über eine Auswerteelektronik 24 die Messergebnisse ausgeben. Die Probeflüssigkeit wird schliesslich zur Entsorgung in einen Auffangbehälter 25 ausgestossen.

Es ist das Bestreben, Analysenautomaten der gezeigten Art möglichst störungsfrei zu betreiben. Da die zu analysierenden Flüssigkeiten von den verschiedensten Quellen herkommen, sind diesem Bestreben jedoch Grenzen gesetzt. Insbesondere bereiten immer wieder kleine Partikel, beispielsweise Blutgerinnsel, Schwierigkeiten, da diese Teile den Automaten verstopfen können, was Analysefehler nach sich zieht oder die Messungen gar verunmöglicht. In solchen Fällen müssen die kritischen Teile ausgebaut und gesäubert werden, was neben dem Aufwand zeitliche Verluste bewirkt.

Es ergibt sich hieraus als Aufgabe der Erfindung, eine Verbesserung der bekannten Analyseautomaten anzugeben, durch die die geschilderten Verstopfungen möglichst weitgehend vermieden werden.

Die Lösung dieser Aufgabe wird durch den kennzeichnenden Teil des unabhängigen Anspruchs angegeben. Die abhängigen Ansprüche geben Ausgestaltungen und Varianten der Erfindung an.

Die mit dem erfindungsgemässen Analysenautomat erzielten Vorteile liegen insbesondere darin, dass die Mischkammer leicht auszuwecheseln ist, so dass eine Beeinträchtigung der Betriebsfähigkeit des Analysenautomats, die auf eine durch ein Partikel, z.B. ein Gerinnsel, verstopfte Mischkammer zurückzuführen ist, leicht und schnell beseitigt werden kann. Darüber hinaus ermöglicht die erfindungsgemässe Ausbildung der Mischkammer, eine schnelle und Wirksame Reinigung, so dass allfällige in deren Auslasskanal enthaltenen Partikel leicht entfernt werden können.

Im folgenden wird die Erfindung anhand von Figuren näher beschrieben. Es zeigen:
- Figur 1: Blockschaltbild eines Analysenautomaten als Stand der Technik und oben bereits besprochen,
- Figur 2: Perspektivische Ansicht einer Mischkammereinheit und der zugeordneten Sockeleinheit,
- Figur 3: Schnitt durch die Mischkammereinheit,
- Figur 4: Schnitt durch die Mischkammereinheit und die Sockeleinheit.

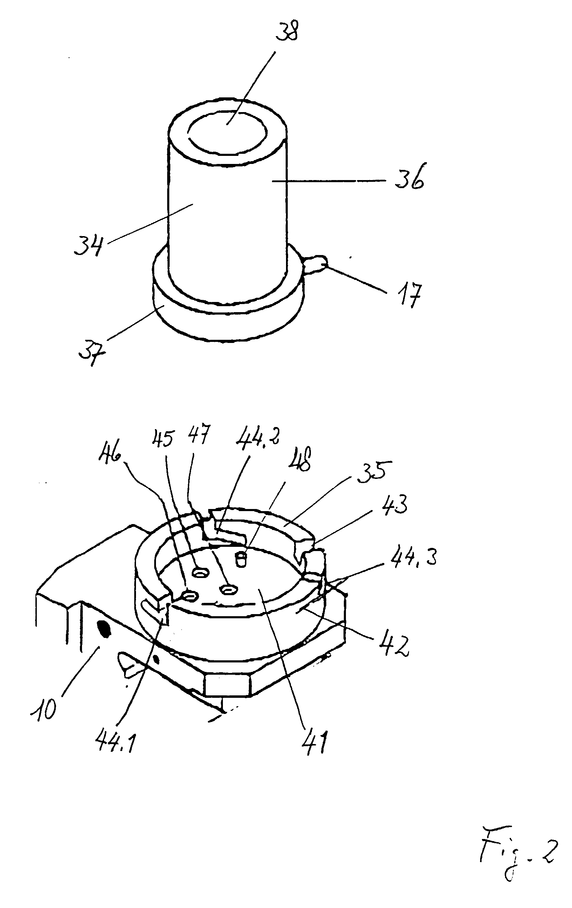

Figur 2 zeigt in perspektivischer Ansicht eine Mischkammereinheit 34 und eine zugeordnete Sockeleinheit 35. Die Mischkammereinheit 34 besitzt eine im wesentlichen zylindrische Aussenwandung 36, an die sich unten eine Bodenplatte 37 mit grösserem Durchmesser nahtlos anschliesst. Seitlich ragt aus dieser Platte 37 in Form eines Anschlussnippels die erste Auslassöffnung 17 heraus, an die ein Abwasserschlauch anschliessbar ist. Die Mischkammereinheit 34 ist oben offen (Probenöffnung 38) und besitzt einen ebenen Boden. In diesen mündet - in der Darstelllung verdeckt, jedoch aus Figur 1 ersichtlich - die Auslassöffnung 17. Weiter gehen von diesem Boden zwei Steigleitungen in die Wandung 36 der Mischkammereinheit 34 nach oben, die dann in die aus Figur 1 bekannten Einlassöffnungen 15, 16 einmünden.

Die Sockeleinheit bildet das Gegenstück des Analyseautomaten 10 zur Mischkammereinheit 34. Die Sockeleinheit 35 besitzt dementsprechend einen ebenen Boden 41, der zylindrisch von einem Führungszylinder 42 umgeben ist, in den die Bodenplatte 37 bündig einsetzbar ist. In den Führungszylinder 42 sind ein Einschnitt 43 zum Aufnehmen der Auslassöffnung 17 sowie drei Verriegelungsschlitze 44.1, 44.2, 44.3 eingefügt. Im Boden 41 enden der Anschluss 45 der Steigleitung für Luft, der Anschluss 46 der Steigleitung für Wasser und der Anschluss 47 der zweiten Auslassöffnung 20 für die zu analysierende Flüssigkeit; Weiter ist ein Zapfen 48 vorgesehen, der zusammen mit einem nicht gezeigten Sackloch in der Bodenplatte 37 zur winkelgerechten Führung der Mischkammereinheit 34 beim Einsetzen in die Sockeleinheit 35 dient.

Die Anschlüsse 45, 46, 47 sind mit (bevorzugt auswechselbaren) Dichtungsringen 49 (Fig. 4) versehen, die ein dichtes Verbinden mit den Öffnungen 15, 16 bzw. 20 gewährleisten. Zur Fixierung der Mischkammereinheit 34 in der Sockeleinheit 35 dient ein nicht gezeigter Überwurfring, der von oben her über die Mischkammereinheit 34 schiebbar ist, der die Oberkante der Bodenplatte 37 erfasst, und der mittels innen angeordneter Zapfen, die in die Verriegelungsschlitze 44.1, 44.2, 44.3 eingreifen und einer Drehung im Uhrzeigersinn fixierbar ist.

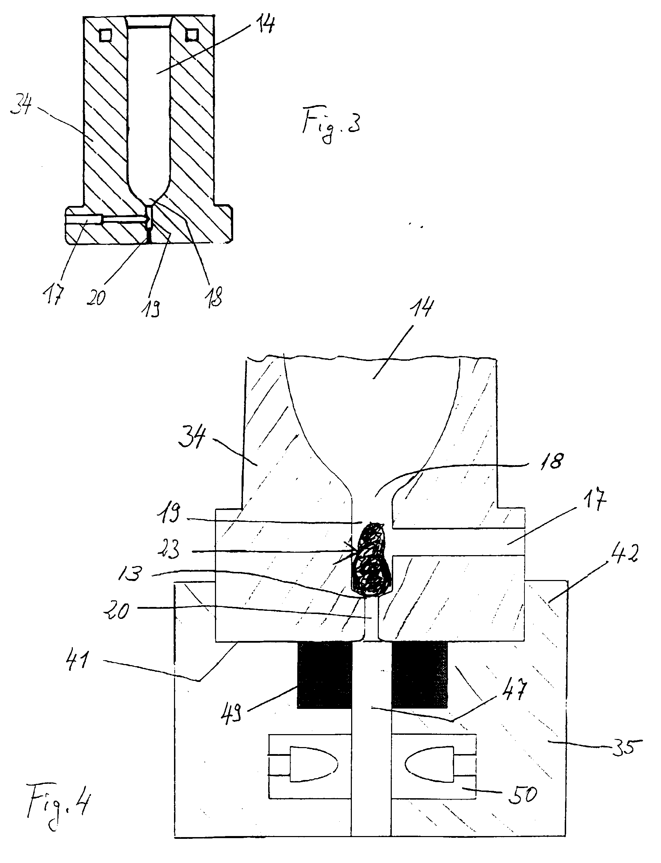

Figur 3 zeigt einen zentralen Schnitt durch die Mischkammereinheit 34, etwa im Grössenverhältnis 2 : 1 zur Wirklichkeit. Die oben offene Mischkammer 14 besitzt zylindrische Ausbildung mit möglichst glatter Wandfläche, die sich nach unten verjüngt, beispielsweise konisch. Die Wand der Mischkammer hat an der Spitze 18 am unteren Ende der Mischkammer 14 eine Ausgangsöffnung 18, an die sich eine vertikale Bohrung 19 anschliesst, deren Durchmesser bzw. lichte Weite etwa derjenigen der Verbindungsleitung 21 und des Messkanals des Analysenblocks 22 entspricht. Mit dieser vertikalen Bohrung 19 ist horizontal die erste Auslassöffnung 17 verbunden. Unterhalb der Bohrung 19 setzt sich diese als zweite Auslassöffnung 20 mit einem bei einem Uebergang (13) abrupt vermindertem Durchmesser fort, wobei der verminderte Durchmesser beispielsweise noch ein Drittel des Durchmessers der Bohrung 19 beträgt. Praktische Werte sind beispielsweise 0,3 - 0,4 mm für die Auslassöffnung 20 und 0,8 mm für die Bohrung 19. Die Verengung 13 der Auslassöffnung 20 dient als Falle für Partikel, die geeignet sind, die eingangs beschriebenen Verstopfungen hervorzurufen.

Figur 4 zeigt in weiterer Vergrösserung einen zusätzlichen Schnitt durch die Mischkammereinheit 34 und die Sockeleinheit 35. An der Stelle der Verengung 13 zwischen der Bohrung 19 und der zweiten Auslassöffnung 20, d. h. in der Auffangfalle, ist ein Partikel 23 gezeigt, dem dort der Weiterweg in Richtung des Anschlusses 47 verwehrt ist. Dieses Partikel 23 vermindert oder blockiert den gewünschten Durchfluss der zu analysierenden Messflüssigkeit zum Analysenblock 22. Ein solcher Zustand lässt sich jeweils durch einen Fluidsensor 50 beim Anschluss 47 detektieren, der das Ausbleiben der erwarteten Flüssigkeit registriert. In einem solchen Fall kann hierdurch der Analysenautomat dann gestoppt werden.

Zur Behebung einer solchen Blockierung kann entweder versucht werden, durch Zufuhr von Wasser aus der Einlassöffnung 16 und Absaugen des Wassers über die seitliche Auslassöffnung 17 das blockierende Partikel 23 wegzuspülen. Oder es lässt sich mit wenigen Handgriffen die betroffene Mischkammereinheit 34 durch eine Reserveeinheit ersetzen, wodurch der Analysenautomat 10 wieder funktionsfähig wird. Die betroffene Mischkammereinheit 34 lässt sich durch Durchspülen bzw. Durchblasen in Richtung von der Auslassöffnung 20 zur Mischkammer 14 ebenfalls leicht reinigen, so dass die jeweils betroffene Einheit 34 rasch als nunmehrige Reserveeinheit wieder zur Verfügung steht.

Die beschriebene Aufteilung des Analysenautomaten 10 in ein Grundgerät mit Sockeleinheit 35 und eine leicht auswechselbare Mischkammereinheit 34 mit Partikelfalle ist einfach im Aufbau und vermindert längere Ausfallzeiten des Automaten 10. Der Fluidsensor 50 dient dabei als sicherer Detektor für allenfalls notwendiges Auswechseln und Reinigen der Mischkammereinheit. Feste Bestandteile der zu analysierenden Flüssigkeit, die die zweite Auslassöffnung 20 passieren, beeinträchtigen die Messungen im Analysenblock 22 nicht und bieten keine Gefahr für Verstopfungen bisher üblicher Art. Damit werden die Stillstandzeiten für Analysenautomaten 10 wesentlich gesenkt und die Wartungsarbeiten massiv reduziert.

Im Rahmen der geschilderten Erfindung liegen eine ganze Reihe von Varianten. Einige davon werden nachfolgend explizit aufgeführt.
- Die Form der Mischkammer muss nicht zwingend zylindrisch sein. Sie kann auch z. B. gebaucht oder im Querschnitt oval sein. Es ist jedoch dafür zu sorgen, dass die Gefässwände glattwandig sind, um Materialablagerungen zu vermeiden. Weiter muss nach unten eine Verjüngungszone bestehen, die ein einwandfreies Ablaufen von Flüssigkeit gewährleistet.
- Die erste Auslassöffnung 17 für abzuführende Flüssigkeit kann nach unten statt zur Seite führen.
- Die Befestigung der Mischkammereinheit 34 in der Sockeleinheit 35 kann anders gelöst sein, z. B. durch einen Hebelverschluss.
- Die Partikelfalle kann anstatt aus der Bohrung 19 und der Auslassöffnung 20 mit jeweils zylindrischem Querschnitt auch unter Verwendung nicht zylindrischer Querschnitte gebildet sein, z. B. eines kleeblattförmigen Querschnittes in der Auslassöffnung 20.
- Die Partikelfalle kann wie oben beschrieben integrierender Bestandteil der Mischkammereinheit 34 sein. Es ist jedoch auch möglich, die Verringerung der lichten Weite der Bohrung 19 durch ein eigenständiges Teil zu bewirken, das quer oder längs zu dieser Bohrung auswechselbar angeordnet ist, beispielsweise eine in die Bohrung 19 eingeschraubte Düse.

Alles in allem betrifft die Erfindung damit einen Analysenautomat 10 für die Untersuchung von Flüssigproben, wenigstens umfassend eine vertikal ausgerichtete Mischkammer 14 mit wenigstens einer Einlassöffnung 15,16 , für Luft bzw. Wasser und mit einer Auslassöffnung 20 für zu analysierende Flüssigkeit, und einen der Mischkammer 14 nachgeschalteten Analysenblock 22 samt Auswerteeinheit 24, dadurch gekennzeichnet, dass die Mischkammer 14 in einer eigenständigen auswechselbaren Einheit angeordnet ist, und dass der Auslassöffnung 20 für die zu analysierende Flüssigkeit eine Auffangfalle für Partikel 23 zugeordnet ist.

## Patentansprüche

1. Analysenautomat (10) für die Untersuchung von Flüssigproben, welcher Analysenautomat eine Mischkammer (14) und einen der Mischkammer (14) nachgeschalteten Analysenblock (22) samt Auswerteeinheit (24)umfasst, wobei die Mischkammer (14) wenigstens eine Einlassöffnung (15, 16) für Luft bzw. Wasser hat und mit einer Auslassöffnung (20) für zu analysierende Flüssigkeit verbunden ist,
dadurch gekennzeichnet,
dass die Mischkammer (14) in einer eigenständigen, auswechselbaren Einheit (34) angeordnet ist, und
dass der Auslassöffnung (20) für die zu analysierende Flüssigkeit eine Auffangfalle für Partikel (23) zugeordnet ist.

2. Analysenautomat nach Anspruch 1,
dadurch gekennzeichnet,
dass die Mischkammereinheit (34) und als Gegenstück des Automaten (10) eine Sockeleinheit (35) so aufeinander abgestimmt sind, dass die Mischkammereinheit in einer einzigen Lage mit der Sockeleinheit (35) zusammensetzbar und in dieser Lage abdichtend verriegelbar ist.

3. Analysenautomat nach Anspruch 2,
dadurch gekennzeichnet,
dass die Mischkammer (14) eine Wandung besitzt, die sich nach unten kontinuierlich zu einer Spitze verjüngt, wo eine Ausgangsöffnung (18) der Wandung liegt, welche Ausgangsöffnung (18) in eine Bohrung (19) und die nachfolgende Auslassöffnung (20) einmündet, und
dass die Auffangfalle als integrierender Bestandteil der auswechselbaren Einheit (34) dadurch gebildet ist, dass die lichte Weite der Auslassöffnung (20) wesentlich geringer ist als die lichte Weite der Bohrung (19) bei im wesentlichen unvermitteltem Übergang (13).

4. Analysenautomat nach Anspruch 2,
dadurch gekennzeichnet,
dass die Mischkammer (14) eine Wandung besitzt, die sich nach unten kontinuierlich zu einer Spitze verjüngt, wo eine Ausgangsöffnung (18) der Wandung liegt, welche Ausgangsöffnung (18) in eine Bohrung (19) einmündet, und
dass die Auffangfalle dadurch gebildet ist, dass ein auswechselbares Teil die lichte Weite der Auslassöffnung (20) relativ unvermittelt wesentlich verringert.

5. Analysenautomat nach Anspruch 3,
dadurch gekennzeichnet,
dass die Mischkammereinheit (34) so ausgebildet ist, dass zwei Steigleitungen parallel zur Mischkammer (14) verlaufen und als Einlassöffnungen (15, 16) in diese Kammer (14) einmünden.

6. Analysenautomat nach den Ansprüchen 1 bis 5,
dadurch gekennzeichnet,
dass die Mischkammereinheit (34) einen ebenen Boden aufweist, in den die Auslassöffnung (20) und die genannten Steigleitungen nebeneinander münden,
dass die Sockeleinheit (35) eine zugeordnete, ebenfalls ebene Bodenfläche (41) aufweist mit zugeordneten Anschlüssen (45-47), und
dass an den Anschlüssen (45-47) auswechselbare Abdichtungmittel (49) vorgesehen sind.

7. Analysenautomat nach Anspruch 3 oder 4,
dadurch gekennzeichnet,
dass eine weitere Auslassöffnung (17) zum Absaugen der zu entfernenden Flüssigkeit quer zur Auslassöffnung (20) im Bereich der Bohrung (19) angeordnet ist.

8. Analysenautomat nach Anspruch 1,
dadurch gekennzeichnet,
dass in der Verbindungsleitung (21) von der Mischkammer (14) zum Analysenblock (22) ein Fluidsensor (50) angeordnet ist zum Detektieren durchfliessender Flüssigkeit.

9. Analysenautomat nach Anspruch 2,
dadurch gekennzeichnet,
dass die Mischkammereinheit (34) aus durchsichtigem Material besteht.
